# EUROPÄISCHE PATENTSCHRIFT

(11) **EP 0 612 386 B1**
(45) Veröffentlichungstag und Bekanntmachung des Hinweises auf die Patenterteilung: **23.10.1996**
(21) Anmeldenummer: 92923509.1
(22) Anmeldetag: 12.11.1992
(51) Int. Cl.: F16K 3/18

(54) **ABSPERRSCHIEBER**
STOP SLIDE VALVE
VANNE D'ARRET

(30) Priorität: 15.11.1991 DE 4137642
(43) Veröffentlichungstag der Anmeldung: 31.08.1994
(73) Patentinhaber: Zimmermann & Jansen GmbH, D-52322 Düren (DE)
(72) Erfinder: ABSCHLAG, Rudolf, D-5165 Hürtgenwald-Gey (DE); IRNICH, Franz-Josef, D-5165 Hürtgenwald-Gey (DE)
(74) Vertreter: Behrendt, Arne, Dipl.-Ing.
(86) Internationale Anmeldenummer: EP9202595
(87) Internationale Veröffentlichungsnummer: WO9310381

(56) Entgegenhaltungen:
- FR-A- 2 024 657

## Beschreibung

Die Erfindung betrifft einen Absperrschieber, bestehend aus einem mit einem Durchflußkanal versehenen Gehäuse, in welchem zwei in Durchflußrichtung mit Abstand zueinander angeordnete, gehäusefeste Dichtsitze angeordnet sind, zwischen welche eine Absperrplatte einschiebbar ist, die zwei in Durchflußrichtung mit Abstand zueinander angeordnete, in Durchflußrichtung aneinander geführte Plattenteile aufweist, die mit Hilfe von Lüft- und Anpreßelementen von den Dichtsitzen abhebbar bzw. gegen die Dichtsitze anpreßbar sind.

Solche Absperrschieber mit spreizbaren Doppelplatten als Absperrorgan sind nach dem Stande der Technik in verschiedenen Ausführungsformen bekannt, (vgl. z. B. DE 19 46 581 C2).

Bei den nach dem Stande der Technik bekannten Absperrschiebern der genannten Art befinden sich druckmittelbetätigte Anpreßelemente an der Absperrplatte und müssen zusammen mit dieser bewegt werden. Das hat zur Folge, daß eine bewegliche Druckmittelzufuhr in Form von beweglichen Schläuchen oder dergleichen vorgesehen werden muß. Solche beweglichen Schläuche sind verhältnismäßig empfindlich und werden leicht beschädigt, insbesondere wenn der Absperrschieber sehr häufig betätigt wird oder wenn der Absperrschieber für heiße Medien eingesetzt wird.

Nach dem Stande der Technik sind auch Absperrschieber bekannt, die mit einer starren, einteiligen Schieberplatte und beweglichen Dichtsitzen am Gehäuse arbeiten, welche mittels geeigneter Lüft- und Anpreßelemente gegen die Schieberplatte angepreßt werden können. Das hat jedoch den Nachteil, daß zwischen den beweglichen Gehäusedichtsitzen und dem Gehäuse Führungen vorgesehen werden müssen, die sich leicht verklemmen oder mit Schmutz aus dem durchströmenden Medium zusetzen.

Es ist deshalb Aufgabe der Erfindung, den Absperrschieber der eingangs genannten Art dahingehend weiterzubilden, daß er ohne bewegliche Druckmittelzufuhr zu der beweglichen Schieberplatte auskommt und dementsprechend sicherer und zuverlässger arbeitet.

Zur Lösung dieser Aufgabe schlägt die Erfindung ausgehend von dem Absperrschieber der eingangs genannten Art vor, daß zwischen den Plattenteilen Lüftungsfedern angeordnet sind, deren Federkraft die beiden Plattenteile im Lüftungssinne beaufschlagen, und daß jedem Plattenteil gesondert betätigbare Anpreßelemente zugeordnet sind, die fest mit dem Gehäuse verbunden sind und das zugehörige Plattenteil im Anpreßsinne beaufschlagen.

Beim Absperrschieber gemäß der Erfindung befinden sich die gesondert betätigbaren Anpreßelemente in besonders vorteilhafter Weise alle fest am Gehäuse, so daß mit der Absperrplatte bewegliche Anpreßelemente nicht benötigt werden und dementsprechend als Störquelle ausfallen. Zum Lüften der Plattenteile von den Dichtsitzen braucht lediglich die Anpreßkraft der Anpreßelemente von den Plattenteilen weggenommen zu werden, damit die Lüftungsfedern die Plattenteile von den Dichtsitzen abheben können.

Eine vorteilhafte Ausführungsform der Erfindung sieht vor, daß die Absperrplatte in einem verschiebbaren Brillenschiebergestell angeordnet ist, welches neben der geschlossenen Absperrplatte einen mit einer Durchströmöffnung versehenen offenen Rahmen aufweist, der aus zwei in Durchflußrichtung mit Abstand zueinander angeordneten Rahmenteilen besteht, die durch einen Kompensator verbunden sind und zwischen denen Lüftungsfedern angeordnet sind, deren Federkraft die beiden Rahmenteile im Lüftungssinne beaufschlagen, wobei die beiden Rahmenteile von den gleichen gehäusefesten Anpreßelementen wie die Absperrplatte im Anpreßsinne beaufschlagbar sind.

Diese für einen Brillenschieber typische Bauart hat den besonderen Vorteil, daß für das Anpressen der offenen Rahmenteile gegen die Gehäusedichtsitze keine zusätzlichen Anpreßelemente benötigt werden, sondern daß für diesen Zweck die Anpreßelemente verwendet werden können, die auch die Plattenteile der Absperrplatte im Anpreßsinne beaufschlagen. Gegenüber bekannten Brillenschiebern in Doppelplattenausführung (vgl. DE 19 46 581 C 2) hat der Absperrschieber gemäß der Erfindung also den Vorteil, daß weniger druckmittelbetätigte Anpreßelemente benötigt werden.

Eine zweckmäßige Ausgestaltung der Erfndung sieht vor, daß die Anpreßelemente jeweils Betätigungsstößel aufweisen, die in Anpreßrichtung des jeweiligen Plattenteiles bzw. Rahmenteiles ausfahrbar sind und auf am Außenumfang des jeweiligen Plattenteiles bzw. Rahmenteiles befestigte Stützkonsolen einwirken.

Zweckmäßig sind die jeweils einander gegenüberliegendenden Stützkonsolen der beiden Plattenteile bzw. Rahmenteile über einen begrenzten Verschiebeweg aneinander geführt. Hierdurch übernehmen die Stützkonsolen zugleich die Funktion der Führung der Plattenteile aneinander, so daß gesonderte Führungsmittel entfallen können.

Zweckmäßig sind weiterhin die Lüftungsfedern jeweils zwischen zwei aneinander geführten Stützkonsolen angeordnet. Hierdurch erhalten die Stützkonsolen eine dritte Funktion, nämlich die Aufnahme und Halterung der Lüftungsfedern.

Zweckmäßig liegen weiterhin die Betätigungsstößel von jeweils zwei gegenüberliegend angeordneten Anpreßelementen und die zugehörigen Lüftungsfedern zwischen zwei aneinander geführten Stützkonsolen jeweils auf einer gemeinsamen Achse. Hierdurch wird sichergestellt, daß die von den Anpreßelementen erzeugten Anpreßkräfte momentfrei auf die Lüftungsfedern übertragen werden, um diese zur Kompensation der Lüftungskräfte zusammenpressen zu können und mit der überschießenden Kraft die Plattenteile gegen die Dichtsitze anpressen zu können.

Zweckmäßig sind die Betätigungsstößel der Anpreßvorrichtungen im Anpreßsinne durch Betätigungsfedern beaufschlagt, deren Federkaft größer als die der Lüftungsfedern ist, und im Einfahrsinne durch Stellmotore beaufschlagbar. Bei dieser Ausbildung der Anpreßvorrichtungen werden die Anpreßkräfte bei der Abdichtstellung des Absperrschiebers durch Federkräfte erzeugt, wobei die gesamte Anpreßkraft der Summe der Anpreßkräfte der einzelnen Anpreßfedern abzüglich der Rückstellkraft der Lüftungsfedern entspricht. Lediglich zur Einleitung des Lüftvorganges werden die Anpreßelemente im Einfahrsinne durch Stellmotore beaufschlagt. Diese Beaufschlagung kompensiert mindestens die Anpreßkräfte der Anpreßfedern der Anpreßelemente, so daß die Federkräfte der Lüftungsfedern wirksam werden können und die Plattenteile bzw. Rahmenteile von den Dichtsitzen des Gehäuses abheben.

Die Stellmotore sind zweckmäßig als Druckmittelzylinder ausgebildet. In diesem Falle sind, um eine gleichmäßige Kraftverteilung beim Lüftungsvorgang zu erzielen, die Druckräume aller Anpreßelemente durch eine gehäusefeste Druckmittelleitung miteinander verbunden.

Alternativ können die Stellmotore auch als Schraubspindelantriebe ausgebildet sein.

Ein Ausführungsbeispiel der Erfindung wird im folgenden anhand der Zeichnung näher erläutert. Es zeigen:

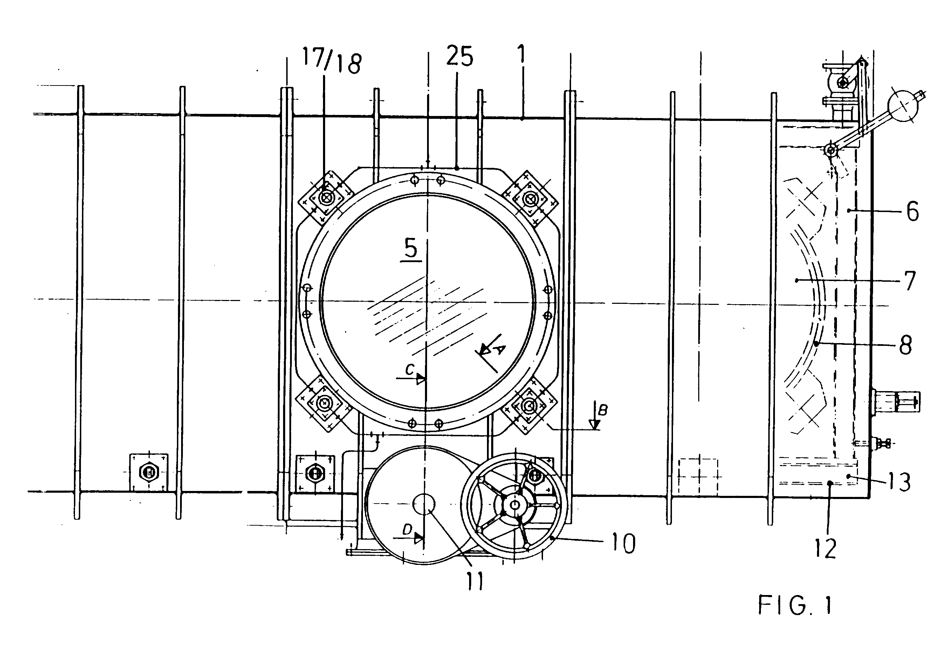

- Fig. 1: einen Absperrschieber gemäß der Erfindung in einer Ansicht in Durchströmungsrichtung;

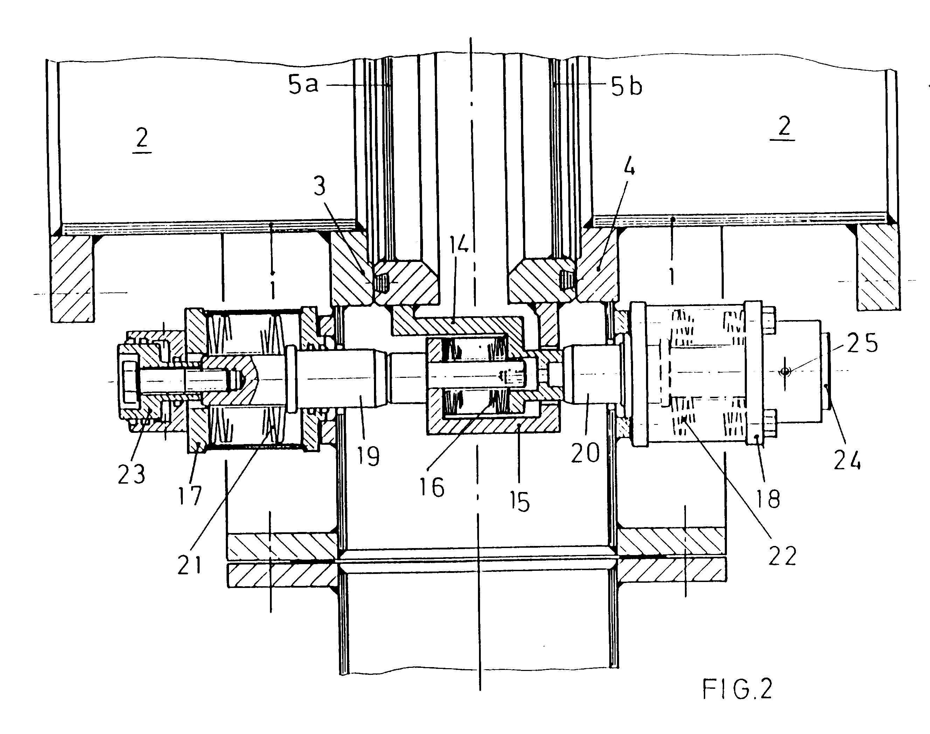

- Fig. 2: einen Schnitt entlang der Linie A - B in Fig. 1 bei Schließstellung des Schiebers;

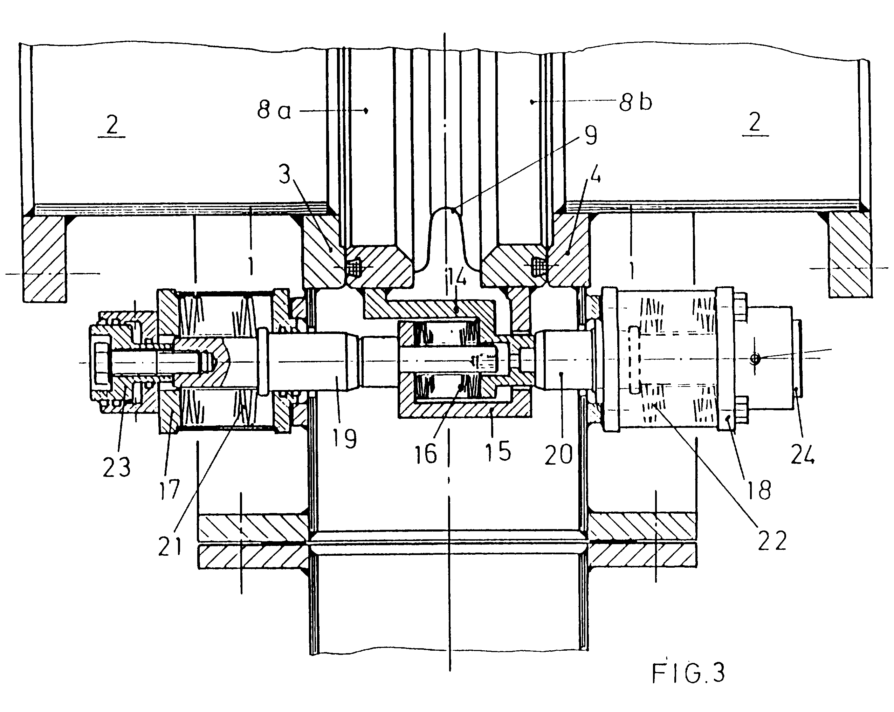

- Fig. 3: einen Schnitt entlang der Linie A - B in Fig. 1 bei Öffnungsstellung des Schiebers;

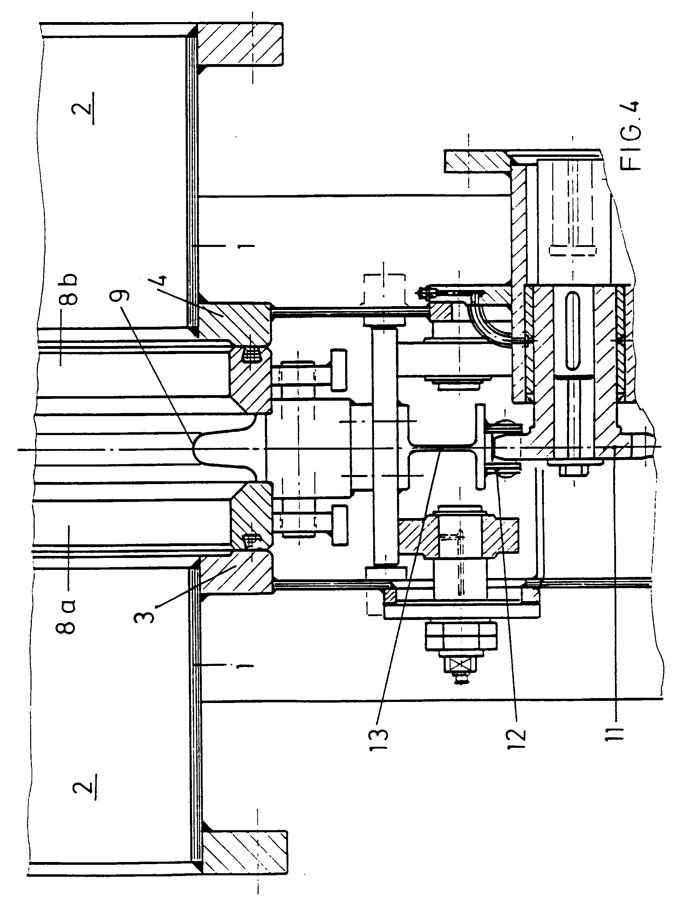

- Fig. 4: einen Schnitt entlang der Linie C - D in Fig. 1 bei Öffnungsstellung des Schiebers.

In der Zeichnung ist das Schiebergehäuse in seiner Gesamtheit mit dem Bezugszeichen 1 bezeichnet. Im Inneren des Gehäuses 1 befinden sich ein Durchflußkanal 2 und zwei in Durchflußrichtung mit Abstand zueinander angeordnete gehäusefeste Dichtsitze 3 und 4. Zwischen diese beiden gehäusefesten Dichtsitze 3 und 4 ist eine Absperrplatte 5 einschiebbar, die aus zwei in Durchflußrichtung mit Abstand zueinander angeordneten und in Durchflußrichtung aneinander längsverschiebbar geführten Plattenteilen 5a und 5b besteht, die gegen die Dichtungssitze 3 und 4 anpreßbar sind.

Die zweiteilige Absperrplatte 5 befindet sich in einem Brillenschiebergestell 6, in welchem neben der zweiteiligen Absperrplatte 5 ein mit einer Durchflußöffnung 7 versehener offener Rahmen 8 gelagert ist, der - ebenso wie die Absperrplatte 5 - aus zwei in Durchflußrichtung mit Abstand zueinander angeordneten Rahmenteilen 8a und 8b besteht, die in Durchströmungsrichtung aneinander verschiebbbar geführt sind, gegen die gehäusefesten Dichtsitze 3 und 4 anpreßbar sind und durch einen Kompensator 9 verbunden sind.

Das Brillenschiebergestell 6 ist als rechteckiger Rahmen ausgebildet, der in dem Gehäuse 1 quer zur Durchströmungsrichtung verschiebbar ist. Zum Verschieben dient ein von einem Handrad 10 angetriebenes Triebstockzahnrad 11, welches in einen langgestreckten Triebstock 12 am unteren Längsholm 13 des Brillenschiebergestelles 6 eingreift.

Die Plattenteile 5a und 5b bzw. die Rahmenteile 8a und 8 b sind jeweils mit auf den Umfang verteilt mit Stützkonsolen 14 und 15 versehen. Dabei greifen jeweils zwei einander gegenüberliegende Stützkonsolen 14 und 15 hakenartig ineinander und sind in Strömungsrichtung begrenzt verschiebbar aneinander geführt.

Zwischen den beiden Stützkonsolen 14 und 15 sind Lüftungsfedern 16 angeordnet, die jeweils als Tellerfederpakete ausgebildet sind, die die Stützkonsolen 15 und 16 derart beaufschlagen, daß sich die beiden Plattenteile 5a und 5b bzw. die beiden Rahmenteile 8a und 8b im Lüftungssinne gegeneinander bewegen und von den Dichtsitzen 3 und 4 abheben.

Den Stützkonsolen 14 und 15 jeweils gegenüberliegend sind am Gehäuse 1 druckmittelbetätigte Anpreßelemente 17 und 18 vorgesehen. Diese Anpreßelemente 17 und 18 weisen jeweils Betätigungsstößel 19 und 20 auf, die sich beim Ausfahren gegen Anschlagflächen an den Stützkonsolen 14 und 15 anlegen und die den Stützkonsolen 14 und 15 zugeordneten Plattenteile 5a und 5b bzw. Rahmenteile 8a und 8b unter Überwindung der Kraft der Lüftungsfedern 16 gegen die zugehörigen Dichtungssitze 3 und 4 anpressen.

Die Betätigungsstößel 19 und 20 sind jeweils im Ausfahrsinne von Betätigungsfedern 21 und 22 beaufschlagt, die ebenfalls als Tellerfederpakete ausgebildet sind und deren Federkaft deutlich größer als die der Lüftungsfedern 16 ist. Im Einfahrsinne sind die Betätigungsstößel 19 und 20 demgegenüber hydraulisch verstellbar. Hierzu sind die Betätigungsstößel 19 und 20 an ihren äußeren Enden mit hydraulischen Stellmotoren 23 und 24 verbunden, bei deren Druckbeaufschlagung die Betätigungsstößel 19 und 20 unter Überwindung der Rückstellkräfte der Betätigungsfedern 21 und 22 im Einfahrsinne verschoben werden. Hierdurch werden die Betätigungssteößel 19 und 20 von den Stützkonsolen 14 und 15 abgehoben, so daß die Lüftungsfedern 16 die Plattenteile 5a und 5b bzw. die Rahmenteile 8a und 8b von den Dichtsitzen 3 und 4 abheben und derart gegeneinander bewegen, daß die Absperrplatte 5 bzw. der offene Rahmen 8 zusammen mit dem Brillenschiebergestell 6 quer zur Durchströmungsrichtung bewegt werden können.

Die hydraulischen Stellmotore 23 und 24 der gehäusefesten Anpreßelemente 17 und 18 sind untereinander durch eine hydraulische Ringleitung 25 verbunden, so daß alle Stellmotore 23 und 24 gleichzeitig mit Druckmittel beaufschlagt werden können.

An die Stelle der hydraulischen Stellmotore 23, 24 können auch Schraubspindelantriebe treten.

## Patentansprüche

1. Absperrschieber, bestehend aus einem mit einem Durchflußkanal versehenen Gehäuse (1), in welchem zwei in Durchflußrichtung mit Abstand zueinander angeordnete gehäusefeste Dichtsitze (3,4) angeordnet sind, zwischen welche eine Absperrplatte (5) einschiebbar ist, die zwei in Durchflußrichtung mit Abstand zueinander angeordnete, in Durchflußrichtung aneinander geführte Plattenteile (5a,5b) aufweist, die mit Hilfe von Lüft- und Anpreßelementen von den Dichtsitzen (3,4) abhebbar bzw. gegen die Dichtsitze (3,4) anpreßbar sind,
**dadurch gekennzeichnet,**
daß zwischen den Plattenteilen (5a, 5b) Lüftungsfedern (16) angeordnet sind, deren Federkaft die beiden Plattenteile (5a, 5b) im Lüftungssinne beaufschlagen, und daß jedem Plattenteil (5a, 5b) gesondert betätigbare Anpreßelemente (17, 18) zugeordnet sind, die fest mit dem Gehäuse (1) verbunden sind und das zugehörige Plattenteil (5a, 5b) im Anpreßsinne beaufschlagen.

2. Absperrschieber nach Anspruch 1, dadurch gekennzeichnet, daß die Absperrplatte (5) in einem verschiebbaren Brillenschiebergestell (6) angeordnet ist, welches neben der geschlossenen Absperrplatte (5) einen mit einer Durchströmöffnung (7) versehenen offenen Rahmen (8) aufweist, der aus zwei in Durchflußrichtung mit Abstand zueinander angeordneten Rahmenteilen (8a, 8b) besteht, die durch einen Kompensator (9) verbunden sind und zwischen denen Lüftungsfedern (16) angeordnet sind, deren Federkaft die beiden Rahmenteile (8a, 8b) im Lüftungssinne beaufschlagen, wobei die beiden Rahmenteile (8a, 8b) von den gleichen gehäusefesten Anpreßelementen (17, 18) wie die Plattenteile (5a, 5b) der Absperrplatte (5) im Anpreßsinne beaufschlagbar sind.

3. Absperrschieber nach den Ansprüchen 1 oder 2, dadurch gekennzeichnet, daß die Anpreßelemente (17, 18) jeweils Betätigungsstößel (19, 20) aufweisen, die in Anpreßrichtung des jeweiligen Plattenteiles (5a, 5b) bzw. Rahmenteiles (8a, 8b) ausfahrbar sind und auf am Außenumfang des jeweiligen Plattenteiles (5a, 5b) bzw. Rahmenteiles (8a, 8b) befestigte Stützkonsolen (14, 15) einwirken.

4. Absperrschieber nach Anspruch 3, dadurch gekennzeichnet, daß die jeweils einander gegenüberliegenden Stützkonsolen (14, 15) der beiden Plattenteile (5a, 5b) bzw. Rahmenteile (8a, 8b) in Durchflußrichtung über einen begrenzten Verschiebeweg aneinander geführt sind.

5. Absperrschieber nach Anspruch 4, dadurch gekennzeichnet, daß die Lüftungsfedern (16) jeweils zwischen zwei aneinander geführten Stützkonsolen (14, 15) angeordnet sind.

6. Absperrschieber nach Anspruch 5, dadurch gekennzeichnet, daß die Betätigungsstößel (19, 20) von jeweils zwei gegenüberliegend angeordneten Anpreßelementen (17, 18) und die zugehörigen Lüftungsfedern (16) zwischen zwei aneinander geführten Stützkonsolen (14, 15) jeweils auf einer gemeinsamen Achse liegen.

7. Absperrschieber nach einem der Ansprüche 1 bis 6, dadurch gekennzeichnet, daß die Betätigungsstößel (19, 20) der Anpreßelemente (17, 18) im Anpreßsinne durch Betätigungsfedern (21, 22) beaufschlagt sind, deren Federkaft größer als die der Lüftungsfedern (16) ist, und im Einfahrsinne durch Stellmotore (23, 24) beaufschlagbar sind.

8. Absperrschieber nach Anspruch 7, dadurch gekennzeichnet, daß die Stellmotore (23, 24) als Druckmittelzylinder ausgebildet sind.

9. Absperrvorrichtung nach Anspruch 8, dadurch gekennzeichnet, daß die Druckräume der Stellmotore (23, 24) aller Anpreßelemente (17, 18) durch eine gehäusefeste Druckmittelleitung (25) miteinander verbunden sind.

10. Absperrschieber nach Anspruch 7, dadurch gekennzeichnet, daß die Stellmotore (23, 24) als Schraubspindelantriebe ausgebildet sind.

## Claims

1. Stop slide valve, comprising a housing (1) provided with a throughflow channel and two sealing seats (3, 4) secured to the housing (1) and spaced apart in the direction of flow, whereas a stop plate (5) can be slid between said sealing seats (3, 4), said stop plate (5) being composed of two plate components (5a, 5b) mutually spaced apart and guided in the direction of flow, which can be lifted off from or pressed against the sealing seats (3, 4) by means of lifting and pressing elements, **characterized in** that lift springs (16) whose elastic force acts upon both plate components (5a, 5b) so as to lift them are arranged between the plate components (5a, 5b) and that individually actuated pressing elements (17, 18) fixed to the housing (1) are associated with each plate component (5a, 5b) and act upon the respective plate components (5a, 5b) to press them down.

2. Stop slide valve according to claim 1, characterized in that the stop plate (5) is disposed in a slideable goggle valve carriage (6), which next to the closed stop plate (5) is provided with an open frame (8) with a through-pass-opening (7) composed of two frame components (8a,8b) mutually spaced apart in the direction of flow and coupled by a compensator (9), whereas lift springs (16) whose elastic force acts upon both frame components (8a, 8b) so as to lift them are arranged between the frame components (8a, 8b) and both frame components (8a, 8b) are actuated by the same pressing elements (17, 18) secured to the housing (1) to press them down as the plate components (5a, 5b) of the stop plate (5).

3. Stop slide valve according to claim 1 or 2, characterized in that the pressing elements (17,18) each have actuating plungers (19, 20), which are extendable in the pressing direction of each plate component (5a, 5b) and frame component (8a, 8b) respectively and which actuate bearing brackets (14, 15), which are attached circumferentially to each plate component (5a, 5b) and frame component (8a, 8b) respectively.

4. Stop slide valve according to claim 3, characterized in that the opposing bearing brackets (14, 15) of the two plate components (5a, 5b) and frame components (8a, 8b) respectively are guided along one another for a limited sliding way in the direction of flow.

5. Stop slide valve according to claim 4, characterized in that each of the lift springs (16) is positioned between two bearing brackets (14, 15) guided along one another.

6. Stop slide valve according to claim 5, characterized in that the actuating plungers (19, 20) of two opposing pressing elements (17, 18) and the respective lift springs (16) between two bearing brackets (14,15) guided along one another are located on a common axis.

7. Stop slide valve according to one of the claims 1 to 6, characterized in that the actuating plungers (19,20) of the pressing elements (17, 18) are pressed down by actuate springs (21, 22), whose elastic force is larger than the elastic force of the lift springs (16), and are lifted by actuators (23, 24).

8. Stop slide valve according to claim 7, characterized in that the actuators (23, 24) are pressure driven master cylinders.

9. Stop slide valve according to claim 8, characterized in that the pressure rooms of the actuators (23, 24) of all pressing elements (17, 18) are connected with one another by means of pressure pipes (25) fixed to the housing (1).

10. Stop slide valve according to claim 7, characterized in that the actuators (23, 24) are jackscrew drivers.

## Revendications

1. Vanne d'arrêt se composant d'un corps (1) pourvu d'un conduit de passage d'écoulement et dans lequel sont montés deux sièges d'étanchéité (3, 4) solidaires du corps et espacés l'un de l'autre en direction du passage d' écoulement, entre lesquels est déplaçable de façon rétractable une plaque obturatrice (5) qui comporte deux éléments de plaque (5a, 5b) espacés l'un de l'autre dans la direction de passage d'écoulement et guidés l'un contre l'autre dans la direction de passage d'écoulement et qui peuvent être écartas des sièges d'étanchéité (3, 4) et pressés contre les sièges d'étanchéité (3, 4) par des élémence d'écartement et de pression, caractérisée en ce qu'entre les éléments de plaque (5a, 5b) sont disposés des ressorts d'écartement (l6) dont la force de ressort solicite les deux éléments de plaque (5a, 5b) dans le sens d'écartement et en ce qu'à chaque élément de plaque (3a, 5b) sont associés des éléments de pression (17, 18) actionnables séparément et qui sont solidaires du corps (1) et sollicitent l'élément de plaque associé (5a, 5b) dans le sens d'appui serré.

2. Vanne d'arrêt selon la revendication 1, caractérisée en ce que la plaque obturatrice est montée dans un châssis coulissant à lunette (6) qui, outre la plaque obturatrice fermée (5), comporte un cadre ouvert (8) pourvu d'un orifice de passage d'écoulement (7), lequel cadre consiste en deux éléments de cadre (8a, 8b) espacés l'un de l'autre dans la direction de passage d'écoulement et qui sont reliés par un compensateur (9) et entre lesquels sont montés des ressorts d'écartement (16) dont la force de ressort sollicite les deux éléments de cadre (8a, 8b) dans le sens d'écartement, les deux éléments de cadre (8a, 8b) pouvant être sollicités dans le sens d'appui pressé par les mêmes éléments de pression (17, 18) solidaires du corps que les éléments de plaque (5a, 5b) de la plaque obturatrice (5).

3. Vanne d'arrêt selon la revendication 1 ou 2, caractérisée en ce que les éléments de pression (17, 18) comporte respectivement des poussoirs d'actionnement (19, 20) qui sont déplaçables en extension dans le sens d'appui pressé des éléments de plaque (5a, 5b) ou éléments de cadre (8a, 8b) respectifs et agissent sur des consoles d'appui (14, 15) fixées à la périphérie externe de l'élément de plaque (5a, 5b) ou élément de cadre (8a, 8b) respectif.

4. Vanne d'arrêt selon la revendication 3, caractérisée en ce que les consoles d'appui mutuellement opposées (14, 15) des deux éléments de plaque (5a, 5b) ou éléments de cadre (8a, 8b) sont guidées l'une contre l'autre dans la direction de passage d'écoulement sur une course de déplacement limitée.

5. Vanne d'arrêt selon la revendication 4, caractérisée en ce que les ressorts d'écartement (16) sont disposés respectivement entre deux consoles d'appui (14, 15) guidées l'une contre l'autre.

6. Vanne d'arrêt selon la revendication 5, caractérisée en ce que les poussoirs d'actionnement (19, 20) respectivement de deux éléments de pression (17, 18) mutuellement opposés et les ressorts d'écartement associés (16) entre deux consoles d'appui (14, 15) guidées l'une contre l'autre sont situés respectivement sur un axe commun.

7. Vanne d'arrêt selon l'une des revendications 1 à 6, caractérisée en ce que les poussoirs d'actionnement (19, 20) des éléments de pression (17, 18) sont sollicités dans le sens d'appui pressé par des ressorts d'actionnement (21, 22) dont la force de ressort est supérieure à celle des ressorts d'écartement (16) et qui sont sollicités par des moteurs positionneurs (23, 24) dans le sens du déplacement de rétraction.

8. Vanne d'arrêt selon la revendication 7, caractérisée en ce que les moteurs positionneurs (23, 24) sont réalisés sous forme de vérins à cylindre à fluide sous pression.

9. Vanne d'arrêt selon la revendication 8, caractérisée en ce que les espaces de pression des moteurs positionneurs (23, 24) de tous les éléments de pression (17, 18) sont reliés entre eux par des conduites de fluide sous pression (25) solidaires du corps.

10. Vanne d'arrét selon la revendication 7, caractérisée en ce que les moteurs positionneurs (23, 24) sont réalisés sous forme de dispositifs de commande à tige filetée.
